# EUROPÄISCHE PATENTSCHRIFT

(11) **EP 4 504 448 B1**
(45) Veröffentlichungstag und Bekanntmachung des Hinweises auf die Patenterteilung: **25.03.2026**
(21) Anmeldenummer: 23721264.2
(22) Anmeldetag: 06.04.2023
(51) Int. Cl.: B23K 9/00, B23K 31/02, B23K 9/235, B23K 9/025, F16G 1/20, B21D 53/14, B23K 101/18, B23K 103/04

(54) **VERFAHREN ZUR HERSTELLUNG UND/ODER ZUR BEARBEITUNG EINES ENDLOSBANDES MIT EINEM BANDKÖRPER AUS METALL**
METHOD FOR PRODUCING AND/OR PROCESSING A CONTINUOUS BELT COMPRISING A BELT BODY MADE OF METAL
PROCÉDÉ DE FABRICATION ET/OU DE TRAITEMENT D'UNE COURROIE CONTINUE COMPRENANT UN CORPS DE COURROIE EN MÉTAL

(30) Priorität: 08.04.2022 AT 502302022
(43) Veröffentlichungstag der Anmeldung: 12.02.2025
(73) Patentinhaber: Berndorf Band GmbH, 2560 Berndorf (AT)
(72) Erfinder: HOLZER, Christian, 2822 Walpersbach (AT)
(74) Vertreter: Burger, Hannes Alfred
(86) Internationale Anmeldenummer: PCT/AT2023/060119
(87) Internationale Veröffentlichungsnummer: WO 2023/193036

(56) Entgegenhaltungen:
- EP-B1- 1 812 191
- CN-A- 103 042 285
- US-A- 3 138 863

## Beschreibung

Die Erfindung betrifft ein Verfahren zur Herstellung und/oder zur Bearbeitung eines Endlosbandes mit einem Bandkörper aus Metall, wobei zumindest zwei Abschnitte des Bandkörpers durch Schweißen miteinander verbunden werden.

Weiters wird ein Endlosband mit einem Bandkörper aus Metall beschrieben. Ein einschlägiges Endlosband ist aus der EP 1812191 B1 bekannt geworden.

Bei einem Schließen eines offenen Metallbandes zu einem Endlosband können freie Endabschnitte des Metallbandes miteinander mittels einer sogenannten Querschweißnaht, die üblicherweise schräg oder quer zu einer Umfangsrichtung des Endlosbandes verläuft, miteinander verschweißt werden. Um ein Durchschweißen und eine von einer Außenseite des Endlosbandes bis zur Innenseite des Endlosbandes durchgehende Schweißnaht zu gewährleisten, wird üblicherweise ein Flussmittel verwendet.

Nachteilig bei einem direkten Auftragen des Flussmittels auf den Schweißspalt ist, dass sich in der Schweißnaht aufgrund des sogenannten Marangoni-Effekts Einkerbungen bilden können, wodurch es in einem Bereich der Schweißnaht zu deutlichen Planheits- und Dickenabweichungen gegenüber anderen Bereichen des Endlosbandes kommen kann.

Aufgabe der vorliegenden Erfindung war es, die Nachteile des Standes der Technik zu überwinden und die Qualität der Schweißnaht zu verbessern.

Diese Aufgabe wird mit einem Verfahren der eingangs genannten Art erfindungsgemäß dadurch gelöst, dass vor einem Verschweißen der zumindest zwei Abschnitte in einem Schritt i) ein in einem Stoßbereich der zumindest zwei Abschnitte gebildeter Schweißspalt mit einer Abdeckung abgedeckt wird, wobei in einem darauffolgenden Schritt ii) zumindest auf zumindest einen an die Abdeckung anschließenden und von der Abdeckung unbedeckten Bereich des Bandkörpers ein Flussmittel aufgetragen wird, wobei die Abdeckung in einem darauffolgenden Schritt iii) entfernt und die zumindest zwei Abschnitte entlang des Schweißspaltes in einem Schritt iv) miteinander verschweißt werden, wobei die Abdeckung eine Breite quer zu einem Längsverlauf des Schweißspaltes zwischen 2 mm - 150 mm aufweist.

Die erfindungsgemäße Lösung ermöglicht die Herstellung einer wesentlich verbesserten Schweißnaht, wobei Dicken- und Planheitsabweichungen deutlich reduziert werden können. Weiters kann eine Schweißnaht mit einer sehr geringeren Breite realisiert werden. Weiters ermöglicht die Erfindung eine optimale Handhabung der Abdeckung und gleichzeitig einen geringen Flussmittelverbrauch, da bevorzugterweise mit wachsendem Abstand einer Flussmittelkante zu dem Schweißspalt mehr Flussmittel aufgetragen wird.

Bevorzugt kann die Abdeckung eine Folie, insbesondere eine Kunststofffolie, bevorzugt ein Klebeband oder Kunststoffstreifen, sein, wobei die Folie bevorzugt eine transparente Folie mit einem Transmissionsgrad zwischen 20 % - 99 % ist. Durch einen hohen Transmissionsgrad bzw. eine gute Transparenz der Abdeckung wird eine exakte Anordnung der Abdeckung auf dem Schweißspalt wesentlich vereinfacht.

Besonders günstig hinsichtlich der Erzielung einer geringen Schweißnahtbreite bei einer großen Schweißnahtdicke hat sich erwiesen, dass das in Schritt ii) aufgetragene Flussmittel 20 - 60 Gew. % TiOₓ und/oder 0 - 5 Gew. % Cr₃Oₓ aufweist. Diese Variante der Erfindung ermöglicht ein gutes Durchschweißen und die Realisierung einer geringen Schweißnahtbreite auch bei Verbindung von Endabschnitten sehr dicker Bandkörper.

Vorteilhafterweise kann das Flussmittel beispielsweise durch Aufsprühen und/oder Aufstreichen und/oder Aufwalzen und/oder Drucken aufgebracht werden. Da durch die Abdeckung ein Auftragen des Flussmittels direkt auf den Schweißspalt verhindert wird, lässt sich durch diese Variante der Erfindung ein besonders schnelles und einfaches Auftragen des Flussmittels bewerkstelligen. So kann beispielsweise das Flussmittel während des Aufbringens auch auf die Abdeckung aufgesprüht, aufgepinselt, etc. werden, wobei nach Entfernen der Abdeckung das auf der Abdeckung befindliche Flussmittel mitentfernt wird und sich das auf der Bandoberfläche verbleibende Flussmittel in einem Abstand von dem Schweißspalt befindet.

Zur Erzielung besonders schmaler und tiefer Schweißnähte hoher Qualität hat es sich als vorteilhaft erwiesen, dass in Schritt iv) ein WIG-Schweißverfahren, ein WP-Schweißverfahren, ein WSG-Schweißverfahren, ein MIG-Schweißverfahren, ein MAG-Schweißverfahren, ein MSG-Schweißverfahren, ein Laserschweißverfahren oder ein Plasmaschweißverfahren verwendet wird.

Um ein Endlosband mit einer geringen Planheits- und Dickenabweichung über seinen gesamten Bandumfang und seine gesamte Bandbreite sowie hohen mechanischen Belastbarkeit zu erzielen, kann es vorgesehen sein, dass die zumindest zwei Abschnitte vor einem Verbinden miteinander freie Endbereiche des Bandkörpers bilden, wobei durch Verbinden der zwei Abschnitte der Bandkörper zu dem Endlosband geschlossen wird.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Endlosbandes;
- Fig. 2: einen Stoßbereich zweier freier Endabschnitte eines Bandkörpers des Endlosbandes aus Fig. 1 mit einem abgedeckten Schweißspalt während des Auftragens eines Flussmittels;
- Fig. 3: den Bereich aus Fig. 2 nach dem Auftragen des Flussmittels und einem Entfernen der Abdeckung;
- Fig. 4: einen Schnitt entlang der Linie IV-IV in Fig. 1 und
- Fig. 5: einen Schnitt entlang der Linie V-V in Fig.1.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Im Folgenden werden die Figuren übergreifend beschrieben.

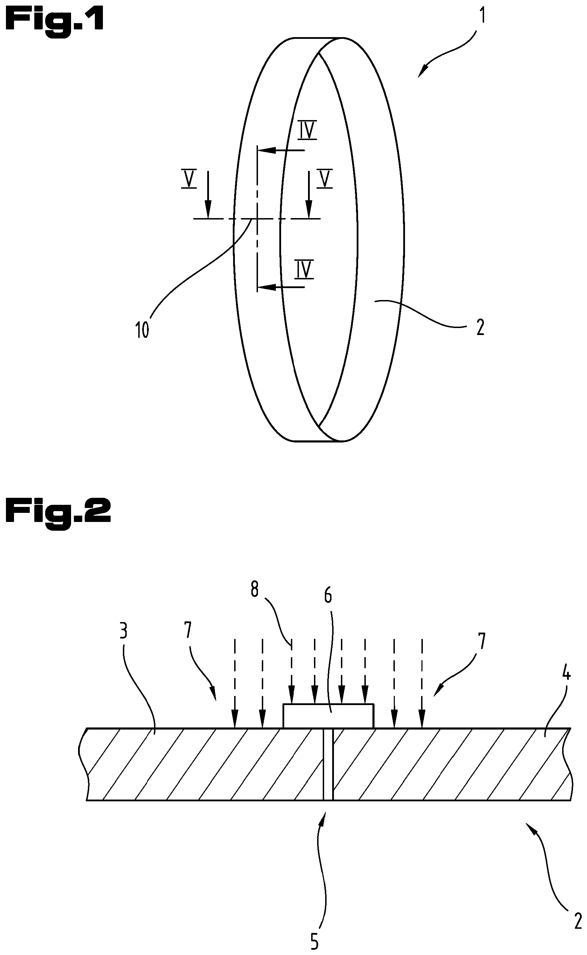

Gemäß Fig. 1 weist ein Endlosband 1 einen Bandkörper 2 aus Metall auf. Das Endlosband 1 kann eine Umfangslänge von 2 m - 300 m und eine Bandbreite von 1200 mm - 9000 mm aufweisen. Besonders bevorzugt ist der Bandkörper 2 aus einem Stahl, der 12,0% - 28,0% Cr, 3,5 % - 15,0% Ni, 0% - 14% Cu, 0% - 1% Ti, 0 - 2% Si, 0% - 2 % Mn, 0% - 6% Mo, 0% - 2% N und maximal 0,01% - 0,20 % C aufweist, hergestellt.

Weiters kann das Endlosband 1 eine Zugfestigkeit von 1000 N/mm² - 1800 N/mm² aufweisen.

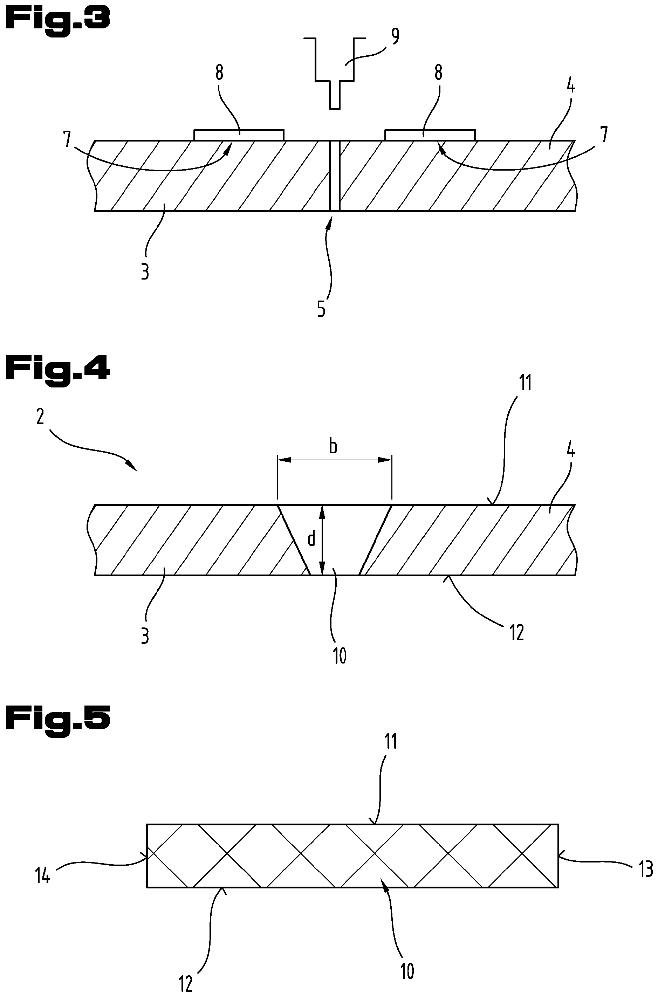

Zur Herstellung des Endlosbandes 1 werden wie in den Fig. 2 und 3 gezeigt, zumindest zwei Abschnitte 3, 4 des Bandkörpers 2 durch Schweißen miteinander verbunden. Die Abschnitte 3, 4 können, bevor sie miteinander verbunden werden, freie Endbereiche des Bandkörpers 2 bilden. Durch Verbinden der zwei Abschnitte 3, 4 kann der Bandkörper zu dem Endlosband 1 geschlossen werden. Es ist aber auch möglich, dass das Endlosband 1 beispielsweise im Rahmen einer Wartung oder Reparatur des Endlosbandes 1 zu einem offenen Band aufgetrennt und danach durch Verschweißen der Abschnitte 3, 4 wieder geschlossen wird. Auch kann einer der Abschnitte 3, 4 im Rahmen einer Bearbeitung des Endlosbandes 1 als Ersatzteil in eine zuvor in den Bandkörper 2 eingebrachte Öffnung eingesetzt werden. So kann beispielsweise bei einer Bandreparatur ein beschädigter Teil des Bandkörpers 2 herausgeschnitten und durch ein unbeschädigtes Blechstück ersetzt werden.

Vor einem Verschweißen der Abschnitte 3, 4 wird in einem Schritt i) ein in einem Stoßbereich der zumindest zwei Abschnitte 3, 4 gebildeter Schweißspalt 5 mit einer Abdeckung 6 abgedeckt. Die Abdeckung 6 kann den Schweißspalt 5 über seine gesamte Länge und Breite vollständig abdecken. Die Abdeckung 6 kann eine Folie, insbesondere eine Kunststofffolie, bevorzugt ein Klebeband oder Kunststoffstreifen, sein. Bevorzugt handelt es sich bei der Abdeckung 6 um eine transparente Folie mit einem Transmissionsgrad zwischen 20 % - 99 %. Die Transparenz der Abdeckung 6 erleichtert eine exakte Ausrichtung der Abdeckung 6 entlang des Schweißspaltes 5. Hinsichtlich der Handhabbarkeit und der Optimierung des Bedarfs an Flussmittel 8 ist erfindungsgemäß vorgesehen, dass die Abdeckung 6 eine Breite quer zu einem Längsverlauf des Schweißspaltes 5 zwischen 2 mm - 150 mm aufweist.

In einem Schritt ii) wird auf mindestens einen an die Abdeckung 6 angrenzenden und von der Abdeckung 6 unbedeckten Bereich 7 des Bandkörpers 2 ein Flussmittel 8 aufgetragen. Als besonders vorteilhaft hinsichtlich eines Durchschweißens und der Erzielung einer sehr guten Schweißnahtqualität hat sich herausgestellt, dass das in Schritt ii) aufgetragene Flussmittel 8 20 - 60 Gew. % TiOₓ und/oder 0 - 5 Gew. % Cr₃Oₓ aufweist.

Wie in Fig. 2 dargestellt, kann das Flussmittel 8 in Längsrichtung der Abdeckung 6 betrachtet zu beiden Längsseiten der Abdeckung 6 auf die Oberfläche des Bandkörpers 2 aufgebracht werden. Hierbei wird das Flussmittel 8 in Längsrichtung der Abdeckung 6 betrachtet in links und rechts der Abdeckung 6 befindliche Bereiche 7 der Oberfläche des Bandkörpers 2 aufgetragen. Auch wenn sich eine Aufbringung des Flussmittels 8, wie in Fig. 2 dargestellt, in beide seitlich neben der Abdeckung 6 befindlichen Bereiche 7 als besonders vorteilhaft erweisen hat, so kann es jedoch auch ausreichend sein, das Flussmittel 8 in nur einen links oder rechts der Abdeckung 6 liegenden Bereich 7 aufzubringen.

Das Flussmittel 8 kann beispielsweise durch Aufsprühen und/oder Aufstreichen und/oder Aufwalzen und/oder Drucken aufgebracht werden. Da die Schweißnaht 5 durch die Abdeckung 6 geschützt ist, kann das Flussmittel 8 während des Auftragens auch direkt mit der Abdeckung 6 in Berührung kommen.

In einem darauffolgenden Schritt iii) wird die Abdeckung 6 entfernt. Wie aus Fig. 3 ersichtlich ist, befindet sich nach Entfernen der Abdeckung 6 im Bereich des Schweißspaltes 5 kein Flussmittel 8. Das Flussmittel 8 ist nur in Bereichen 7 vorhanden, die an den Bereich angrenzen, der zuvor von der Abdeckung 6 bedeckt war. Wenn die Abdeckung 6 sehr gerade Längskanten aufweist, kann auch ein sehr geradliniger Verlauf einer Front des Flussmittels 8 an der dem Schweißspalt 5 zugewandten Kante des Flussmittels 8 erzielt werden.

Nach Entfernen der Abdeckung 6 werden die zwei Abschnitte 3, 4 entlang des Schweißspaltes 5 in einem Schritt iv) mittels einer Schweißvorrichtung 9 miteinander verschweißt. Als besonders vorteilhaft hat sich erwiesen, wenn in Schritt iv) ein WIG-Schweißverfahren, ein WP-Schweißverfahren, ein WSG-Schweißverfahren, ein MIG-Schweißverfahren, ein MAG-Schweißverfahren, ein MSG-Schweißverfahren, ein Laserschweißverfahren oder ein Plasmaschweißverfahren zum Einsatz kommt.

Gemäß Fig. 1 kann die mit dem erfindungsgemäßen Verfahren erzielte Schweißnaht 10 eine quer oder schräg zu einer Umfangsrichtung des Endlosbandes 1 verlaufende Schweißnaht sein, wobei der Bandkörper 2 durch die Schweißnaht zu dem Endlosband 1 geschlossen sein kann.

Wie aus Fig. 4 erkennbar ist, weist die Schweißnaht 10 ein Verhältnis einer Dicke d zu einer maximalen Breite b von größer oder gleich 1:4, insbesondere größer gleich 1:3, 1:2 oder 2:3 auf. Die Schweißnaht 10 kann eine maximale Breite b von 2 mm - 10 mm, insbesondere zwischen 5 mm - 10 mm, besonders bevorzugt zwischen 7 mm - 8 mm betragen. Der Bandkörper 2 kann beispielsweise eine Dicke von 0,8 mm - 4 mm aufweisen. Weiters weist der Bandkörper 2 eine erste Hauptoberfläche 11 und eine zweite Hauptoberfläche 12 auf.

Wie aus Fig. 5 ersichtlich ist, sind die erste Hauptoberfläche 11 und die zweite Hauptoberfläche 12 über Seitenflächen 13, 14 miteinander verbunden. Wie aus Fig. 5 weiters ersichtlich ist, verläuft die Schweißnaht 10 über die gesamte Breite des Bandkörpers 2.

Gemäß Fig. 4 erstreckt sich die Dicke d der Schweißnaht 10 von der ersten Hauptoberfläche 11 des Bandkörpers 2 bis zu der zweiten Hauptoberfläche 12. Die Schweißnaht 10 kann beispielsweise eine I-Naht, eine V-Naht oder eine Steilflankennaht sein.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Endlosband
- 2: Bandkörper
- 3: Abschnitt
- 4: Abschnitt
- 5: Schweißspalt
- 6: Abdeckung
- 7: Bereich
- 8: Flussmittel
- 9: Schweißgerät
- 10: Schweißnaht
- 11: Hauptoberfläche
- 12: Hauptoberfläche
- 13: Seitenfläche
- 14: Seitenfläche

## Patentansprüche

1. Verfahren zur Herstellung und/oder zur Bearbeitung eines Endlosbandes (1) mit einem Bandkörper (2) aus Metall, wobei zumindest zwei Abschnitte (3, 4) des Bandkörpers (2) durch Schweißen miteinander verbunden werden, **dadurch gekennzeichnet, dass** vor einem Verschweißen der zumindest zwei Abschnitte (3, 4) in einem Schritt i) ein in einem Stoßbereich der zumindest zwei Abschnitte (3, 4) gebildeter Schweißspalt (5) mit einer Abdeckung (6) abgedeckt wird, wobei in einem darauffolgenden Schritt ii) zumindest auf zumindest einen an die Abdeckung (6) angrenzenden und von der Abdeckung (6) unbedeckten Bereich (7) des Bandkörpers (2) ein Flussmittel (8) aufgetragen wird, wobei die Abdeckung (6) in einem darauffolgenden Schritt iii) entfernt und die zumindest zwei Abschnitte (3, 4) entlang des Schweißspaltes (5) in einem Schritt iv) miteinander verschweißt werden, wobei die Abdeckung (6) cinc Breite quer zu einem Längsverlauf des Schweißspaltes (5) zwischen 2 mm - 150 mm aufweist.

2. Verfahren nach Anspruch 1, **dadurch gekennzeichnet, dass** die Abdeckung (6) eine Folie, insbesondere eine Kunststofffolie, bevorzugt ein Klebeband oder Kunststoffstreifen, ist, wobei die Folie bevorzugt eine transparente Folie mit einem Transmissionsgrad zwischen 20 % - 99 % ist.

3. Verfahren nach Anspruch 1 oder 2, **dadurch gekennzeichnet, dass** das in Schritt ii) aufgetragene Flussmittel (8) 20 - 60 Gew. % TiOₓ und/oder 0 - 5 Gew. % Cr₃Oₓ aufweist.

4. Verfahren nach einem der Ansprüche 1 bis 3, **dadurch gekennzeichnet, dass** das Flussmittel (8) durch Aufsprühen und/oder Aufstreichen und/oder Aufwalzen und/oder Drucken aufgebracht wird.

5. Verfahren nach einem der Ansprüche 1 bis 4, **dadurch gekennzeichnet, dass** in Schritt iv) ein WIG-Schweißverfahren, ein WP-Schweißverfahren, ein WSG-Schweißverfahren, ein MIG-Schweißverfahren, ein MAG-Schweißverfahren, ein MSG-Schweißverfahren, ein Laserschweißverfahren oder ein Plasmaschweißverfahren verwendet wird.

6. Verfahren nach einem der Ansprüche 1 bis 5, **dadurch gekennzeichnet, dass** die zumindest zwei Abschnitte (3, 4) vor einem Verbinden miteinander freie Endbereiche des Bandkörpers (2) bilden, wobei durch Verbinden der zwei Abschnitte (3, 4) der Bandkörper zu dem Endlosband (1) geschlossen wird.

## Claims

1. Method for producing and/or processing a continuous belt (1) comprising a belt body (2) made of metal, wherein at least two sections (3, 4) of the belt body (2) are connected together by welding, **characterized in that** prior to welding of the at least two sections (3, 4) a step i) is carried out in which a welding gap (5) formed in the abutting region of the at least two sections (3, 4) is covered by a cover (6), wherein in a subsequent step ii) is carried out in which a fluxing agent (8) is applied in one region (7) of the belt body (2), said region directly adjoining the cover (6) and not being covered by the cover (6), wherein in a subsequent step iii), the cover (6) is removed, and in a step iv), the at least two sections (3, 4) are welded together along the welding gap (5), wherein the cover has a width transverse to a longitudinal course of the welding gap of between 2 mm and 150 mm.

2. Method according to claim 1, **characterized in that** the cover (6) is a film, in particular a plastic film, preferably an adhesive tape or plastic belt, the film preferably being a transparent film with a transmittance of between 20% and 99%.

3. Method according to claim 1 or 2, **characterized in that** the fluxing agent (8) applied in step ii) comprises 20-60% by weight TiOₓ and/or 0-5% by weight Cr₃Oₓ.

4. Method according to any of claims 1 to 3, **characterized in that** the fluxing agent (8) is applied by spraying and/or brushing and/or rolling and/or printing.

5. Method according to any of claims 1 to 4, **characterized in that** in step iv) a TIG welding process, a PA welding process, a MIG welding process, a MAG welding process, a laser welding process or a plasma welding process is used.

6. Method according to any of claims 1 to 5, **characterized in that** the at least two sections (3, 4) form free end regions of the belt body (2) before being joined together, the belt body being closed to form the endless belt (1) by joining the two sections (3, 4).

## Revendications

1. Procédé de fabrication et/ou de traitement d'une courroie continue (1) comprenant un corps de courroie (2) en métal, dans lequel au moins deux sections (3, 4) du corps de courroie (2) sont reliées l'une à l'autre par soudage, **caractérisé en ce que**, avant le soudage des au moins deux sections (3, 4), une étape i) est effectuée, au cours de laquelle un espace de soudage (5) formé dans la région de butée des au moins deux sections (3, 4) est recouvert par un couvercle (6), dans lequel dans une étape ultérieure ii), un agent fluxant (8) est appliqué sur au moins une région (7) du corps de courroie (2) adjacente au couvercle (6) et n'étant pas recouvert par le couvercle (6), dans lequel le couvercle (6) est retiré dans une étape iii) suivante, et les au moins deux sections (3, 4) sont soudées l'une à l'autre le long de l'espace de soudage (5) dans une étape iv), dans lequel le couvercle (6) présente une largeur transversale à une étendue longitudinale de l'espace de soudage (5) comprise entre 2 mm et 150 mm.

2. Procédé selon la revendication 1, **caractérisé en ce que** le couvercle (6) est une feuille, en particulier une feuille de matière plastique, de préférence une courroie adhésive ou une courroie de matière plastique, dans lequel la feuille est de préférence une feuille transparente avec un degré de transmission compris entre 20 % et 99 %.

3. Procédé selon la revendication 1 ou 2, **caractérisé en ce que** l'agent fluxant (8) appliqué à l'étape ii) est constitué de de 20 à 60 % en poids de TiOₓ et/ou de 0 à 5 % en poids de Cr₃Oₓ.

4. Procédé selon l'une quelconque des revendications 1 à 3, **caractérisé en ce que** l'agent fluxant (8) est appliqué par pulvérisation et/ou enduction et/ou laminage et/ou impression.

5. Procédé selon l'une quelconque des revendications 1 à 4, **caractérisé en ce qu'**à l'étape iv) est utilisé un procédé de soudage TIG, un procédé de soudage de WP, un procédé de soudage WSG, un procédé de soudage MIG, un procédé de soudage MAG, un procédé de soudage MSG, un procédé de soudage au laser ou un procédé de soudage au plasma.

6. Procédé selon l'une quelconque des revendications 1 à 5, **caractérisé en ce que** les au moins deux sections (3, 4) forment des zones d'extrémité libres du corps de courroie (2) avant une liaison, dans lequel le corps de courroie est fermé en reliant les deux sections (3, 4) à la courroie continue (1).
